# FASCICULE DE BREVET EUROPEEN

(11) **EP 2 919 939 B1**
(45) Date de publication et mention de la délivrance du brevet: **17.05.2017**
(21) Numéro de dépôt: 13789743.5
(22) Date de dépôt: 31.10.2013
(51) Int. Cl.: B23K 9/00, B23K 9/23, H01M 2/22

(54) **SOUDAGE HETEROGENE ALUMINIUM/CUIVRE**
HETEROGENES ALUMINIUM-/KUPFERSCHWEISSEN
ALUMINIUM/COPPER HETEROGENEOUS WELDING

(30) Priorité: 19.11.2012 FR 1260984
(43) Date de publication de la demande: 23.09.2015
(73) Titulaire: Centre National de la Recherche Scientifique, 75016 Paris (FR); Universite de Nantes, 44000 Nantes (FR)
(72) Inventeur: BENOIT, Alexandre, 44300 Nantes (FR); SCHLEICH, Donald, 44000 Nantes (FR); PAILLARD, Pascal, F-44850 Ligne (FR); BAUDIN, Thierry, F-91190 Gif Sur Yvette (FR)
(74) Mandataire: Pontet Allano & Associes
(86) Numéro de dépôt international: PCT/EP2013/072817
(87) Numéro de publication internationale: WO 2014/075933

(56) Documents cités:
- DE-C- 719 215
- US-A- 2 790 656
- US-A- 2 916 815
- US-A1- 2011 117 420

## Description

L'invention a pour objet un procédé de soudage de pièces minces en cuivre avec des pièces minces en aluminium et l'utilisation de ce procédé pour la fabrication de batteries, notamment de batteries d'accumulateurs électriques utilisées dans l'embarqué et le transport, voir par exemple le document DE 719215 C. Le soudage est une technique d'assemblage permanent qui établit une continuité de nature entre les pièces soudées. La soudure peut donc être le résultat du mélange des matériaux de base et potentiellement d'un produit d'apport.

Les problèmes principaux liés à l'assemblage de pièces fines sont : l'évacuation de l'excès de chaleur, la déformation des pièces et la précision nécessaire : positionnement et accostage des pièces.

Généralement, les procédés de soudage génèrent une quantité de chaleur telle que le bain peut s'effondrer lors du soudage de pièces de faible épaisseur ; par ailleurs les déformations sont d'autant plus importantes que l'épaisseur est faible.

Dans les procédés de soudage MIG/MAG (Métal Inert Gas /Metal Active Gas ou soudage à l'arc avec fil fusible sous protection gazeuse avec un gaz inerte/soudage à l'arc avec fil fusible sous protection gazeuse avec un gaz actif) l'énergie nécessaire à la formation d'un bain est obtenue par un arc électrique, établi entre un fil-électrode et les pièces à souder. Un fil de soudure consommable et un gaz de protection sont alimentés à travers une torche de soudure. Le fil de soudure est maintenu à proximité ou en contact avec une surface de soudage métallique de sorte qu'on obtienne un arc électrique entre ledit fil de soudage et ladite surface métallique. L'arc électrique provoque la liquéfaction de l'extrémité du fil de soudure qui est ensuite appliqué sur la surface de soudage. Un gaz inerte ou semi-inerte est insufflé autour du fil de soudure pour limiter les contaminants à proximité de la soudure. Ces procédés entraînent le chauffage de la surface de soudage à des températures qui provoquent des changements importants indésirables, tels que le durcissement et le gauchissement. Aussi des méthodes de soudage à faible énergie ont été développées, notamment par la société Fronius qui a mis au point un procédé d'assemblage à l'arc électrique d'acier et d'aluminium basé sur le soudage MIG/MAG ; cette méthode, appelée MIG CMT (Métal inert gas Cold Métal Transfer ou soudage à l'arc avec fil fusible sous protection gazeuse avec un gaz inerte et transfert de métal à froid), permet de réduire la chaleur générée sur la surface de soudage. Elle est décrite dans la demande internationale WO 2006/125234 et est basée sur une activation délibérée et systématique de l'arc de chauffage suivie de sa désactivation, de manière à chauffer et refroidir systématiquement le fil de soudure, tout en amenant le fil en et hors de contact avec le bain de fusion à une fréquence rapide. Ce procédé permet un transfert de matière contrôlé et à très faible énergie et permet d'assembler par soudage des tôles fines en aluminium et en acier, matériaux connus pour être incompatibles.

En effet, il est pratiquement impossible de souder à l'arc électrique des métaux dont la température de fusion, le coefficient de dilatation ou le potentiel électrochimique sont très différents. Ainsi, il est impossible de souder de l'aluminium à du cuivre avec des techniques qui entraînent la fusion de l'une des parties car leurs températures de fusion ont environ 600°C de différence. Les jonctions aluminium-cuivre sont donc réalisées par brasage, par soudage par résistance électrique ou par friction (soudage en phase solide). Cependant le brasage implique de mettre les deux pièces au four et est moins solide, le soudage électrique demande des préparations de joint, impossibles à réaliser dans certaines applications, notamment la fabrication des batteries, et le soudage par friction entraîne des contraintes mécaniques et ne permet pas de souder des tôles dont l'épaisseur est de quelques dixièmes de millimètres. Ces techniques sont par ailleurs contraignantes et nécessitent du temps.

L'énergie électrique prend une place de plus en plus importante dans les véhicules pour un grand nombre d'applications. Dans le domaine des véhicules légers, cette montée en puissance concerne les équipements (sécurité, confort, assistance, communication) ou la motorisation avec aussi bien le développement actuel des véhicules hybrides thermiques électriques que celui, plus récent, d'une nouvelle génération de véhicules purement électriques. Dans le domaine des véhicules de transport urbain, où l'électrification est pratiquée très largement (trolleybus, transports guidés), de nouvelles solutions portant sur l'autonomie partielle ou le lissage des appels de puissance, sont mises en oeuvre. Ces innovations technologiques ont en commun de faire intervenir des systèmes de stockage d'énergie embarqué, notamment des batteries Li-ion. Généralement ces batteries sont fabriquées par un assemblage mécanique de différentes cellules, ce qui augmente le poids et l'encombrement final de l'ensemble.

Il existe donc un besoin de disposer d'un procédé d'assemblage de cellules de batteries qui permette de diminuer le poids et l'encombrement final des batteries tout en conservant leur capacité de résistance aux vibrations.

Le but de la présente invention est donc la mise à disposition d'un procédé d'assemblage de cellules de batteries qui permette de diminuer le poids et l'encombrement final des batteries tout en conservant leur capacité de résistance aux vibrations.

L'invention a donc pour objet un procédé d'assemblage par soudage hétérogène d'une première pièce mince à souder en cuivre et d'une seconde pièce mince à souder en aluminium, lesdites pièces ayant une épaisseur inférieure à 1 mm et ledit procédé comprenant une étape consistant à disposer en vis-à-vis les extrémités desdites pièces à assembler et à plaquer lesdites extrémités l'une contre l'autre, de manière à constituer une zone de soudage s'étendant suivant une zone (ou ligne) de soudage entre les pièces ; et à déposer un alliage d'aluminium comme métal d'apport dans ladite zone de soudage par une méthode de soudage à faible énergie dans laquelle l'arc électrique et le fil d'apport fusible sont plus larges que l'épaisseur cumulée des pièces, lesdites pièces étant maintenues de manière à souder le chant des tôles et à garder la zone de soudage vers le haut, par un moyen de fixation comprenant :
a) au moins deux cales rigides en matériau conducteur dont l'épaisseur est comprise entre 1 et 2 mm, dont la longueur est supérieure à celle des pièces à souder et dont la largeur est suffisante pour maintenir lesdites pièces et
b) un système de fixation par pression permettant de maintenir les cales contre les pièces.

Les méthodes de soudage à faible énergie sont connues et permettent de souder plus vite, avec moins d'énergie et quasiment sans projections. On peut citer à titre d'exemple la variante MIG-MAG conventionnel régime court-circuit, la variante MIG-MAG Cold Arc d'EWM (EWM HIGHTEC WELDING) et la méthode CMT (Cold Métal Transfer) telle qu'elle est décrite dans la demande WO 2006/125234.

Le matériau utilisé pour les cales peut être n'importe quel matériau conducteur thermique, ou n'importe quel matériau conducteur thermique et électrique connu de l'homme du métier ; avantageusement la température de fusion dudit matériau est supérieure ou égale à celle du cuivre et de l'aluminium. Elles sont par ailleurs inertes par rapport aux pièces à souder, c'est-à-dire que la nature du matériau des cales ne doit pas réagir avec le matériau des pièces à souder. On peut citer à titre d'exemple les métaux, notamment l'acier, l'aluminium, le cuivre et ses alliages comme le laiton.

Les deux cales constituent un outillage qui joue quatre rôles. Le premier consiste à maintenir les pièces, notamment les tôles, en position pendant l'opération. Le deuxième est un maintien du bain fondu en cas de fusion trop importante. Le troisième est électrique, il assure dans cette application la prise de masse du procédé, c'est-à-dire, le retour électrique nécessaire à la formation de l'arc. Ce troisième rôle peut également être joué par des moyens externes. Le dernier rôle est thermique, il emmagasine le surplus de chaleur pendant l'opération et limite l'étendue de la zone fondue. Ce sont avantageusement deux tôles rigides, de préférence en aluminium, dont la largeur doit être suffisante pour assurer la rigidité et le maintien des pièces ou parties à souder. Un système de fixation par pression permet de serrer l'ensemble et de le démonter aisément.

Le système de fixation par pression peut être n'importe quel système connu, agencé pour maintenir les pièces à souder. La position relative des pièces à souder a peu d'importance et l'homme du métier pourra les positionner selon le type de pièces à souder et le matériel utilisé.

Le fil d'apport fusible est constitué par un alliage d'aluminium, matériau bien connu de l'homme du métier et disponible commercialement. On peut citer à titre d'exemple l'alliage Al-Mg 5356 ou le 4043(Al-Si).

Conformément à l'invention, le dépôt de l'alliage d'aluminium peut être répété plusieurs fois si nécessaire afin de consolider l'assemblage. Ainsi le dépôt peut être répété 2, 3 ou 4 fois.

Conformément à l'invention, on entend par pièce mince à souder tout élément en cuivre ou en aluminium, quelle que soit sa forme, la seule exigence étant que l'épaisseur de la partie à assembler soit inférieure à 1 mm, avantageusement comprise entre 0,5 et 1 mm, encore plus avantageusement entre 0,1 et 0,5 mm.

Dans un mode de réalisation avantageux du procédé d'assemblage par soudage hétérogène selon l'invention, le fil d'apport fusible est amené verticalement ou obliquement vers le bas sur la zone de soudage, à une vitesse comprise entre 1 et 5 m/min avantageusement égale à 2 m/min, dans l'arc électrique. Le choix de la vitesse du fil d'apport est conditionné par la vitesse d'avance de l'arc électrique et l'homme du métier saura choisir la vitesse adaptée.

Dans un autre mode de réalisation avantageux du procédé de l'invention, l'arc électrique est produit par une torche de soudage MIG qui se déplace le long de la zone de soudage.

Conformément à l'invention, les torches de soudage MIG utilisables sont disponibles dans le commerce et l'homme du métier saura choisir celle qui lui convient.

Dans un autre mode de réalisation avantageux de l'invention, la torche de soudage MIG met en oeuvre un gaz inerte, notamment de l'argon pur ou en mélange avec de l'hélium.

Dans un autre mode de réalisation avantageux de l'invention, les pièces minces à souder sont des tôles dont l'épaisseur est inférieure à 1 mm, avantageusement comprise entre 0,5 et 1 mm, encore plus avantageusement entre 0,1 et 0,5 mm.

Conformément à l'invention, les termes tôles, feuilles, lames, plaques, pattes et panneaux sont équivalents, pourvu que leur épaisseur soit inférieure à 1 mm.

Dans un autre mode de réalisation avantageux de l'invention les pièces minces à souder sont les pattes d'électrodes de cellules de batteries.

Le procédé peut être mis en oeuvre manuellement ou être contrôlé par robot. L'homme du métier saura choisir les moyens de contrôles ou d'automatisation appropriés parmi ceux qui sont disponibles dans le commerce.

L'invention a également pour objet un procédé de fabrication ou de connexion d'une cellule individuelle pour une batterie caractérisé en ce que la liaison électriquement conductrice est générée par un procédé de soudage hétérogène tel que décrit précédemment.

L'utilisation du procédé MIG CMT contribue à la reproductibilité et fonctionne avec une faible énergie de soudage, ce qui est idéal pour le soudage de tôles fines. L'opération de soudage par MIG CMT ne prend que 2 ou 3 secondes en fonction de la longueur de la zone de soudage des électrodes à souder et est conservateur par rapport au reste de la cellule qui est sensible à la chaleur.

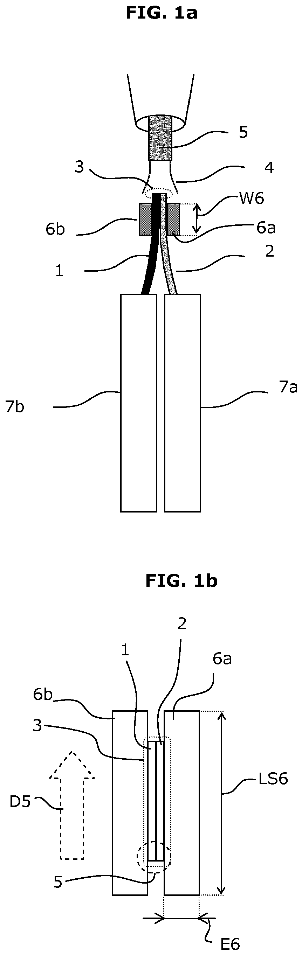

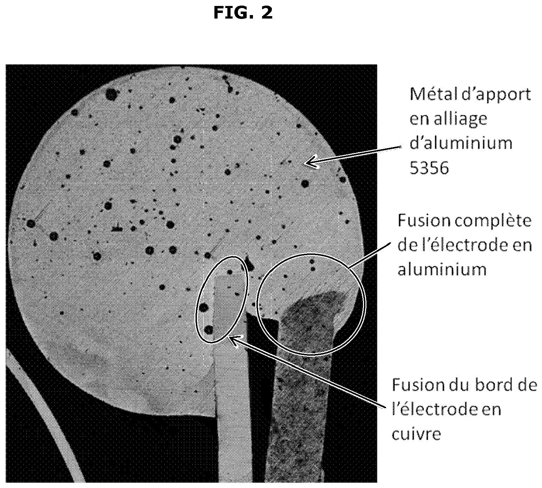

L'invention est illustrée par les figures 1 à 3 et l'exemple qui suivent.

D'autres particularités et avantages de l'invention ressortiront de la description détaillée d'un mode de mise en oeuvre nullement limitatif, et des dessins annexés sur lesquels :
- les Figures la et 1b sont des schémas respectivement en vue de côté et en vue de dessus qui illustrent un exemple de mode de réalisation de l'invention appliqué au soudage de pattes d'électrodes des cellules d'une batterie d'accumulateurs électriques ;
- la Figure 2 est une photo représentant une coupe de la zone soudée réalisée dans l'exemple de la Figure 1 entre l'aluminium et le cuivre des deux électrodes soudées ;
- la Figure 3 est une photo illustrant un détail de la Figure 2, dans une région incluant l'interface entre les pièces de cuivre et d'aluminium, associée à un graphique représentant les proportions des différents métaux présents le long de l'axe représenté sur la figure.

Les Figures 1a et 1b représentent un schéma respectivement en vue de côté et en vue de dessus d'un montage conforme à l'invention, appliqué au soudage de pattes d'électrodes des cellules d'une batterie d'accumulateurs électriques (7a, 7b). Le soudage d'une première patte (1) en cuivre et d'une seconde patte (2) en aluminium, lesdites pattes ayant une épaisseur inférieure à 1 mm, se fait en position vers le bas. Les pattes sont appariées et maintenues en position verticale pendant l'opération de soudage par un outillage formé des cales (6a, 6b). Le soudage se fait sur le chant des tôles. Les extrémités des pattes (1, 2) à assembler sont plaquées l'une contre l'autre, de manière à constituer une zone de soudage (3) s'étendant suivant une zone (ou ligne) de soudage entre les pattes (1, 2) et à déposer un alliage d'aluminium comme métal d'apport dans ladite zone de soudage (3) par une méthode de soudage à faible énergie dans laquelle l'arc électrique (4) et le fil d'apport fusible (5) sont plus larges que l'épaisseur cumulée des pattes (1,2) ; de ce fait, la vitesse de soudage est élevée et le dévidage du fil d'apport est faible par rapport aux normes habituelles du soudage MIG/MAG. La vitesse de déplacement de la torche donc de l'arc électrique et du fil d'apport est illustrée par la flèche (D5). Les pattes (1,2) sont maintenues en position verticale avec les extrémités à souder dirigées vers le haut pendant l'opération de soudage, par un moyen de fixation comprenant deux cales rigides en matériau conducteur (6a, 6b) dont l'épaisseur (E6) est comprise entre 1 et 2 mm, dont la longueur (LS6) est supérieure à celle des pattes à souder (1,2) et dont la largeur (W6) est suffisante pour maintenir lesdites pattes (1,2) ; un système de fixation par pression (non représenté sur les figures) permet de maintenir les cales (6a, 6b) contre les pièces (1,2).

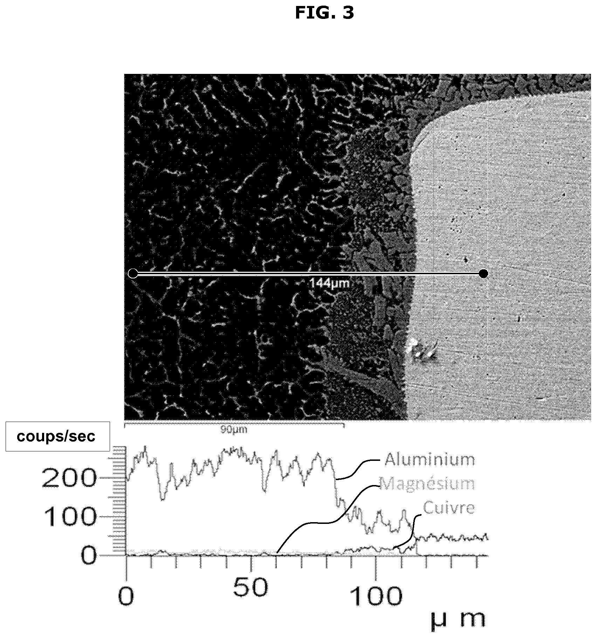

Le graphique de la figure 3 illustre la fusion du cuivre et de l'aluminium. Dans la zone de 0 à 90 µm on a l'alliage aluminium-magnésium 5356, dans la zone 90 à 115 µm on a un mélange alliage d'aluminium-magnésium/cuivre et au-delà de 115 µm on a uniquement du cuivre.

### EXEMPLE : Assemblage par soudage de cellules de batteries

### 1.1 Mode opératoire

Les électrodes sont appariées et maintenues à l'aide des cales. Ces dernières sont serrées à l'aide d'un outillage. L'ensemble est placé de manière à assurer un soudage en position à plat (torche vers le bas). Le retour électrique (masse) est branché. Le soudage a lieu. Puis, la masse électrique est débranchée et les cales sont retirées.

### 1.2 Tests

Les batteries ont été sollicitées mécaniquement (vibrations) lors d'un test prolongé.

Ces dernières ont équipé un fauteuil électrique pendant douze mois sans avarie. Ce test montre la tenue des soudures aux sollicitations (vibrations) et le bon fonctionnement de l'ensemble des cellules.

## Revendications

1. Procédé d'assemblage par soudage hétérogène d'une première pièce mince à souder en cuivre (1) et d'une seconde pièce mince à souder en aluminium (2), lesdites pièces ayant une épaisseur inférieure à 1 mm et ledit procédé comprenant une étape consistant à disposer en vis-à-vis les extrémités desdites pièces (1, 2) à assembler et à plaquer lesdites extrémités l'une contre l'autre, de manière à constituer une zone de soudage (3) s'étendant suivant une zone (ou ligne) de soudage entre les pièces (1, 2) ; lesdites pièces (1,2) étant maintenues de manière à souder le chant des tôles et à maintenir la zone de soudage vers le haut par un moyen de fixation comprenant :
a) au moins deux cales rigides en matériau conducteur (6a, 6b) dont l'épaisseur est comprise entre 1 et 2 mm, dont la longueur est supérieure à celle des pièces à souder (1,2) et dont la largeur est suffisante pour maintenir lesdites pièces (1,2) et
b) un système de fixation par pression permettant de maintenir les cales (6a, 6b) contre les pièces (1,2), **caractérisé en ce que** le procédé comprend:
déposer un alliage d'aluminium comme métal d'apport dans ladite zone de soudage (3) par une méthode de soudage à faible énergie dans laquelle l'arc électrique (4) et le fil d'apport fusible (5) sont plus larges que l'épaisseur cumulée des pièces (1,2).

2. Procédé d'assemblage par soudage hétérogène selon la revendication 1 **caractérisé en ce que** le fil d'apport fusible (5) est amené verticalement ou obliquement vers le bas sur la zone de soudage, à une vitesse comprise entre 1 et 5 m/min avantageusement égale à 2 m/min dans l'arc électrique (4).

3. Procédé d'assemblage par soudage hétérogène selon l'une quelconque des revendications précédentes **caractérisé en ce que** l'arc électrique est produit par une torche MIG qui se déplace le long de la zone de soudage.

4. Procédé d'assemblage par soudage hétérogène selon la revendication 3 **caractérisé en ce que** la torche MIG met en oeuvre un gaz inerte comprenant de l'argon.

5. Procédé d'assemblage par soudage hétérogène selon l'une quelconque des revendications précédentes **caractérisé en ce que** les pièces (1,2) sont des tôles dont l'épaisseur est inférieure à 1 mm, avantageusement comprise entre 0,5 et 1 mm, encore plus avantageusement entre 0,1 et 0,5 mm.

6. Procédé d'assemblage par soudage hétérogène selon l'une quelconque des revendications précédentes **caractérisé en ce que** les pièces (1,2) sont des pattes d'électrodes de cellules de batteries (7a, 7b).

7. Procédé d'assemblage par soudage hétérogène selon l'une quelconque des revendications précédentes **caractérisé en ce que** le procédé est contrôlé par un robot.

8. Procédé de fabrication d'une cellule individuelle pour une batterie **caractérisé en ce que** la liaison électriquement conductrice est générée par un procédé de soudage hétérogène selon l'une quelconque des revendications précédentes.

## Patentansprüche

1. Verfahren zur Schweißverbindung mit artfremden Werkstoffen eines ersten dünnen Werkstücks aus Kupfer (1) und eines zweiten dünnen Werkstücks aus Aluminium (2), wobei die Werkstücke weniger als 1 mm stark sind und wobei das Verfahren einen darin bestehenden Arbeitsschritt umfasst, dass die Endstücke der zu verbindenden Werkstücke (1, 2) gegenüber einander angeordnet und diese Endstücke gegen einander gepresst werden, sodass einen Schweißbereich (3) gebildet wird, der entlang eines Schweißbereichs (oder einer Linie) zwischen den Werkstücken (1, 2) verläuft, wobei die Werkstücke (1, 2) derart gehalten werden, dass die Kante der Bleche geschweißt und der Schweißbereich nach oben durch ein Befestigungsmittel festgehalten wird, welches umfasst:
a) wenigstens zwei steife Keile aus leitfähigem Werkstoff (6a, 6b), die zwischen 1 und 2 mm stark und länger als die zu schweißenden Werkstücke (1, 2) sind und deren Breite zum Festhalten der Werkstücke (1, 2) ausreicht, und
b) ein Druckbefestigungssystem, womit die Keile (6a, 6b) gegen die Werkstücke (1, 2) angeordnet gehalten werden können, **dadurch gekennzeichnet, dass** das Verfahren umfasst: das Ablegen einer Aluminiumlegierung als Zusatzwerkstoff in dem Schweißbereich (3) durch ein niederenergetisches Schweißverfahren, in welchem der Lichtbogen (4) und der Schmelzzusatzdraht (5) breiter sind als die Stärken der beiden Werkstücke (1, 2) zusammen.

2. Verfahren zur Schweißverbindung mit artfremden Werkstoffen nach Anspruch 1, **dadurch gekennzeichnet, dass** der Schmelzzusatzdraht (5) vertikal oder schräg nach unten auf dem Schweißbereich mit einer Geschwindigkeit zwischen 1 und 5 m/Min., vorzugsweise gleich 2 m/Min. im Lichtbogen (4) gebracht wird.

3. Verfahren zur Schweißverbindung mit artfremden Werkstoffen nach einem der vorhergehenden Ansprüche, **dadurch gekennzeichnet, dass** der Lichtbogen von einem MIG-Schweißbrenner erzeugt wird, welcher entlang des Schweißbereichs verschoben wird.

4. Verfahren zur Schweißverbindung mit artfremden Werkstoffen nach Anspruch 3, **dadurch gekennzeichnet, dass** der MIG-Schweißbrenner ein argonhaltiges Inertgas einsetzt.

5. Verfahren zur Schweißverbindung mit artfremden Werkstoffen nach einem der vorhergehenden Ansprüche, **dadurch gekennzeichnet, dass** die Werkstücke (1, 2) Bleche sind, die weniger als 1 mm, vorzugsweise zwischen 0,5 und 1 mm, noch bevorzugter zwischen 0,1 und 0,5 mm stark sind.

6. Verfahren zur Schweißverbindung mit artfremden Werkstoffen nach einem der vorhergehenden Ansprüche, **dadurch gekennzeichnet, dass** die Werkstücke (1, 2) Elektrodenfahnen von Sammlerzellen (7a, 7b) sind.

7. Verfahren zur Schweißverbindung mit artfremden Werkstoffen nach einem der vorhergehenden Ansprüche, **dadurch gekennzeichnet, dass** das Verfahren mit einem Roboter gesteuert wird.

8. Verfahren zur Herstellung einer individuellen Sammlerzelle, **dadurch gekennzeichnet, dass** die elektrisch leitfähige Verbindung mit einem Verfahren für Schweißen von artfremden Werkstoffen nach einem der vorhergehenden Ansprüche erzeugt wird.

## Claims

1. Method of assembly of a first thin part to be welded made of copper (1) and a second thin part to be welded made of aluminium (2) using heterogeneous welding, said parts having a thickness of less than 1 mm and said method comprising a stage consisting of arranging the ends of said parts (1, 2) to be assembled so that they face one another and pressing said ends against one another, so as to constitute a welding zone (3) extending along a welding zone (or line) between the parts (1, 2); said parts (1, 2) being held in such a way as to meld the edge of the sheets and to maintain the welding zone uppermost using a fixing means comprising:
a) at least two rigid blocks of a conductive material (6a, 6b) the thickness of which is comprised between 1 and 2 mm, the length of which is greater than that of the parts to be welded (1, 2) and the width of which is sufficient to hold said parts (1, 2) and
b) a pressure fixing system allowing the blocks (6a, 6b) to be held against the parts,
**characterized in that** the method comprises arranging an aluminium alloy as a filler metal in said welding zone (3) by a low-energy welding method in which the electric arc (4) and the meltable filler wire (5) are wider than the combined thickness of the parts (1, 2).

2. Method of assembly by heterogeneous welding according to claim 1 **characterized in that** the meltable filler wire (5) is brought vertically or obliquely downwards onto the welding zone, at a rate comprised between 1 and 5 m/min advantageously equal to 2 m/min in the electric arc (4).

3. Method of assembly by heterogeneous welding according to any one of the preceding claims **characterized in that** the electric arc is produced by a MIG torch which moves along the welding zone.

4. Method of assembly by heterogeneous welding according to claim 3 **characterized in that** the MIG torch utilizes an inert gas comprising argon.

5. Method of assembly by heterogeneous welding according to any one of the preceding claims **characterized in that** the parts (1, 2) are sheets the thickness of which is less than 1 mm, advantageously comprised between 0.5 and 1 mm, even more advantageously between 0.1 and 0.5 mm.

6. Method of assembly by heterogeneous welding according to any one of the preceding claims **characterized in that** the parts (1, 2) are electrode tabs of battery cells (7a, 7b).

7. Method of assembly by heterogeneous welding according to any one of the preceding claims **characterized in that** the method is controlled by a robot.

8. Method of manufacture of an individual cell for a battery **characterized in that** the electrically conductive connection is produced by a method of heterogeneous welding according to any one of the preceding claims.
